# EUROPÄISCHE PATENTSCHRIFT

(11) **EP 2 322 447 B1**
(45) Veröffentlichungstag und Bekanntmachung des Hinweises auf die Patenterteilung: **24.10.2012**
(21) Anmeldenummer: 10174206.2
(22) Anmeldetag: 26.08.2010
(51) Int. Cl.: B65D 43/02

(54) **Aufsatz für ein Behältnis und Behältnis**
Attachment for a container and container
Accessoire pour un récipient et récipient

(30) Priorität: 13.11.2009 DE 202009015380 U
(43) Veröffentlichungstag der Anmeldung: 18.05.2011
(73) Patentinhaber: GFV Verschlusstechnik GmbH & Co. KG, 72271 Alpirsbach-Peterzell (DE)
(72) Erfinder: Saier, Hanns-Ulrich, 72275, Alpirsbach (DE)
(74) Vertreter: Kohler Schmid Möbus

(56) Entgegenhaltungen:
- WO-A1-03/076291
- DE-A1- 2 312 302
- US-A- 4 643 330
- US-A- 4 953 728
- US-A- 5 960 837
- US-A1- 2006 273 060

## Beschreibung

Die Erfindung betrifft einen Aufsatz für ein Behältnis, umfassend eine rundumlaufende Außenwand mit einem radial nach Innen verlaufenden Wandabschnitt, wobei an der Außenwand eine Mehrzahl von Durchbrüchen ausgebildet ist, die sich teilweise in den radial nach Innen verlaufenden Wandabschnitt erstrecken, und wobei im Bereich der Durchbrüche radial nach Innen hervorstehende Stege ausgebildet sind, wobei bevorzugt die radiale Erstreckung der Stege höchstens der radialen Erstreckung der Durchbrüche im radial nach Innen verlaufenden Wandabschnitt entspricht. Ferner betrifft die Erfindung ein Behältnis umfassend eine mittels eines Aufsatzes verschließbare Öffnung, wobei im Bereich der Öffnung radial nach Außen hervorstehende Stege ausgebildet sind, die entlang mindestens einer Schraubenlinie verlaufen.

Ein derartiger Aufsatz ist beispielsweise durch die US 5,960,837 bekannt geworden. Darin ist ein Unterdruckkanister zum Sammeln von Abfällen, insbesondere von organischen Abfällen eines Patienten, beschrieben. Der Kanister umfasst ein als Eimer ausgebildetes Behältnis und einen als Deckel ausgebildeten Aufsatz, wobei der Deckel mit dem Eimer verrastbar ist. Als Rastmittel wirken im Deckel ausgebildete Durchbrüche mit einer Schürze am Rand des Eimers zusammen.

Beim Verschließen von Behältnissen kommen nicht nur Verrastungen von Deckel und Eimer wie in der US 5,960,837 in Betracht, sondern es besteht auch die Möglichkeit, das Behältnis und den Aufsatz miteinander verschließend zu verschrauben. Bei derartigen Schraubverschlüssen wird der Aufsatz in der Regel über ein an dem Aufsatz ausgebildetes Innengewinde mit einem an dem Behältnis ausgebildeten Außengewinde verschraubt. Das Innengewinde kann grundsätzlich auch am Behältnis und das Außengewinde am Aufsatz ausgebildet sein. Ein Behältnis mit einem Außengewinde, welches radial nach Außen hervorstehende Stege aufweist, die entlang einer Schraubenlinie verlaufen, ist in der US 4,643,330 A beschrieben.

Das Fertigen von solchen Behältnissen und Aufsätzen mit Gewinde ist jedoch herstellungstechnisch aufwändig, insbesondere wenn diese aus Kunststoffen oder anderen im Herstellungsstadium flüssigen Materialien erzeugt und im Spritz- oder Druckgussverfahren hergestellt werden. Bei diesen Verfahren bilden Hohlräume zwischen einer ersten Matrize (ersten Formhälfte) und einer zweiten Matrize (zweiten Formhälfte) die Form, die beim Spritzgießen z.B. von dem flüssigen Kunststoffmaterial ausgefüllt wird. Nach dem Erstarren des Kunststoffs werden die beiden Matrizen voneinander getrennt und es entsteht der entsprechende Formgegenstand, auch Spritz- oder Formling genannt.

Aufgrund der Tatsache, dass Teile der Gewindegänge eines durchgängigen Innen- oder Außengewindes, das mehr als eine volle Umdrehung (360°) aufweist, bezüglich der in axialer Richtung des Gewindes verlaufenden Entformungsrichtung Hinterschneidungen darstellen, müssen beim Spritzgießen von Gewinden spezielle Methoden der Entformung angewendet werden.

Beispielsweise besteht die Möglichkeit, die beiden Matrizen beim Entformen gegeneinander zu verdrehen. Dies erfordert jedoch in der Regel einen aufwändigen Bewegungsmechanismus der Formhälften, wie z.B. eine drehende Lagerung der Formhälften und einen Antrieb, um derartige rotatorische Bewegungsabläufe zu ermöglichen.

Des Weiteren ist es grundsätzlich möglich, Schieber vorzusehen, die gegenüber der jeweiligen Formhälfte verschiebbar sind und somit vor dem Trennen der beiden Formhälften zurückgefahren werden, um ein hindemisfreies Entformen zu ermöglichen. Auch diese Variante ist technisch aufwändig und von komplexen Schiebemechaniken geprägt.

Schließlich kann der Spritzling auch durch Aufbringen entsprechend großer Kräfte aus einer Formhälfte mit Hinterschneidungen herausgezogen werden, wenn der Spritzling aus einem hierfür ausreichend elastischen Material gefertigt worden ist und eine entsprechende Gewindegeometrie, wie insbesondere die Geometrie eines Rundgewindes, gewählt worden ist. Allerdings ist auch diese Methode aufgrund des hohen Kraftaufwandes und der Beschränkung auf wenige Gewindegeometrien nicht ohne weiteres zu bewerkstelligen und birgt darüber hinaus die Gefahr, den Spritzling dauerhaft zu beschädigen.

### Aufgabe der Erfindung

Es ist daher die Aufgabe der vorliegenden Erfindung, einen einfach und kostengünstig herstellbaren Aufsatz bereitzustellen, der mit einem Behältnis dichtend verbindbar ist, sowie ein einfach und kostengünstig herstellbares Behältnis bereitzustellen, das mit einem Aufsatz dichtend verbindbar bzw. verschraubbar ist.

### Kurze Beschreibung der Erfindung

Gemäß einem ersten Aspekt wird diese Aufgabe dadurch gelöst, dass ein Aufsatz der eingangs genannten Art bereit gestellt wird, der dadurch gekennzeichnet ist, dass die Stege entlang mindestens einer Schraubenlinie verlaufen, wobei eine Mittelachse der Schraubenlinie koaxial zu einer Mittelachse der Außenwand verläuft, und dass sich Stege, die entlang eines ersten Schraubenlinienabschnitts verlaufen, und Stege, die entlang eines zweiten in axialer Richtung zum ersten Schraubenlinienabschnitt versetzten Schraubenlinienabschnitts verlaufen, in Umfangsrichtung nicht überlappen.

Durch die Tatsache, dass sich die wendelartig verlaufenden bzw. wendelartig angeordneten und somit ein Gewinde ausbildenden Stege höchstens so weit radial nach Innen, d.h. zur Mittelachse des Aufsatzes hin, erstrecken wie die Teile des Durchbruchs, die sich in den ebenfalls radial nach Innen ausgerichteten Wandabschnitt hinein erstrecken, ist der Aufsatz in axialer Richtung hinterschneidungsfrei ausgebildet. Folglich kann ein derartiger Aufsatz translatorisch entformt werden, obwohl ein Gewinde vorgesehen ist, das typischerweise eine rotatorische Entformung erfordern würde. Mithin können die mit dem Spritz- oder Druckgussverfahren zusammenhängenden Werkzeugkosten sowie die Zykluszeiten zur Produktion der Aufsätze erheblich reduziert werden. Der erfindungsgemäße Aufsatz ist nicht nur mit eingängigen, sondern auch im Zusammenhang mit mehrgängigen Gewinden einsetzbar, d.h. mit Gewinden, die mehrere Gewindegänge (Kerben) aufweisen. Grundsätzlich sind auch vernachlässigbare Überschreitungen der radialen Erstreckung der Stege über die radiale Erstreckung der nach Innen ausgerichteten Wandabschnitte hinaus möglich. Dadurch entstehende geringfügige Hinterschneidungen sind im Sinne der Erfindung vernachlässigbar, wenn die entsprechenden Aufsätze dennoch translatorisch entformbar sind. Dasselbe gilt auch für eine vernachlässigbar kleine Erstreckung der Stege in Umfangsrichtung über die Erstreckung der Durchbrüche hinaus.

Um die Hinterschneidungsfreiheit beim Aufsatz zu garantieren, sind auf der Innenseite der Außenwand in den Bereichen zwischen jeweils zwei Durchbrüchen keine Stege ausgebildet. Die spindelartig entlang der Schraubenlinie angeordneten Stege bilden somit eine mehrfach unterbrochene Gewindespitze aus, die in den Gewindegang (Gewindegrund) eines Gegengewindes eingreifen kann.

Ein erfindungsgemäßer Aufsatz mit einem segmentweise und hinterschneidungsfrei ausgebildeten Innengewinde kann jedoch ohne weiteres mit einem Behältnis, das ein konventionelles, d.h. durchgehendes Gegengewinde (hier: Außengewinde) aufweist, zusammenwirken. Voraussetzung für ein problemloses Zusammenwirken ist selbstverständlich, dass die Gewindesteigungen, die Anzahl der Gewindegänge etc. zueinander passen.

Gemäß einem zweiten Aspekt wird die Aufgabe gelöst durch ein Behältnis der eingangs genannten Art, das dadurch gekennzeichnet ist, dass sich Stege, die entlang eines ersten Schraubenlinienabschnitts verlaufen, und Stege, die entlang eines zweiten in axialer Richtung zum ersten Schraubenlinienabschnitt versetzten Schraubenlinienabschnitts verlaufen, in Umfangsrichtung nicht überlappen. Das Behältnis weist im Bereich der Öffnung beispielsweise eine kreiszylindrische oder konisch rundumlaufende Behältniswand auf, an der die Stege entlang der mindestens einen Schraubenlinie ausgebildet sein können. Die Behältniswand kann zum Beispiel eine Eimerwand oder die Seitenwand einer Dose sein.

Läuft die Schraubenlinie eines Gewindes mehr als eine volle Umdrehung (360°) durchgehend um oder sind mehrere ineinander liegende Schraubenlinien eines mehrgängigen Gewindes vorgesehen, die in axialer Richtung zumindest teilweise versetzt sind, so ergeben sich Umfangsbereiche, in denen sich Schraubenlinienabschnitte in Umfangsrichtung des Behältnisses überlappen. Die entlang der mindestens einen Schraubenlinie verlaufenden Stege sind erfindungsgemäß in Umfangsrichtung derart angeordnet, dass sich keine Überlappung der Stege in Umfangsrichtung ergibt. Dies ermöglicht ein Entformen eines derartigen Behältnisses in axialer Richtung, obwohl ein Gewinde vorgesehen ist, das typischerweise eine rotatorische oder andere aufwändige Entformungsmethoden erfordern würde. Bei einer axialen bzw. translatorischen Entformung können die mit dem Spritz- oder Druckgussverfahren zusammenhängenden Werkzeugkosten sowie die Zykluszeiten zur Produktion der Behältnisse erheblich reduziert werden. Wie oben dargestellt kann das erfindungsgemäße Behältnis nicht nur im Zusammenhang mit eingängigen, sondern auch mit mehrgängigen Gewinden, d.h. mit Gewinden, die mehrere Gewindegänge (Kerben) aufweisen, verwendet werden.

Es ist möglich, dass ein erfindungsgemäßes Behältnis mit einem segmentweise und hinterschneidungsfrei ausgebildeten Außengewinde mit einem Aufsatz zusammenwirkt, der ein konventionelles, d.h. durchgehendes Gegengewinde (hier: Innengewinde) aufweist. Es versteht sich, dass ggf. auch erfindungsgemäße Aufsätze mit erfindungsgemäßen Behältnissen zusammenwirken können. Dies ist insbesondere der Fall, wenn z.B. die Erstreckung der Stege an einem erfindungsgemäßen Aufsatz in Umfangsrichtung regelmäßig größer ist als der Abstand zwischen den Stegen an einem erfindungsgemäßen Behältnis. Ein erfindungsgemäßes Zusammenwirken ist selbstverständlich auch möglich, wenn die Erstreckung der Stege an einem erfindungsgemäßen Behältnis in Umfangsrichtung größer ist als die entsprechenden Abstände der Stege an einem erfindungsgemäßen Aufsatz. Beim Zusammenwirken eines erfindungsgemäßen Aufsatzes mit einem erfindungsgemäßen Behältnis können unterschiedliche Dichtelemente, wie z.B. eine Napfdichtung bzw. Labyrinthdichtung zwischen das Behältnis und den Aufsatz eingebracht werden. Bei einer entsprechend starken gegenseitigen Verschraubung des Aufsatzes und des Behältnisses kann dann eine besonders hohe Dichtheit erreicht werden.

Der erfindungsgemäße Aufsatz kann beispielsweise ein Deckel, ein Verschluss, eine Kartuschendüse oder dergleichen sein. Als Behältnis kommen z.B. Eimer, Dosen, Kanister oder dergleichen in Frage. Die an dem Aufsatz ausgebildeten Durchbrüche sind Löcher bzw. Ausnehmungen in der jeweiligen Wand, also der Außenwand des Aufsatzes. Die das Gewinde ausbildenden und entlang der wendelartigen Schraubenlinie angeordneten Stege sind im Falle des Aufsatzes radial nach Innen (zum Zentrum des Aufsatzes hin) hervorstehende Segmente oder Abschnitte. Im Falle des Behältnisses stehen die Stege radial nach Außen hervor. Grundsätzlich ist auch eine Anordnung der Stege am Aufsatz radial nach Außen bzw. am Behältnis radial nach innen möglich. Die Schraubenlinie des Aufsatzes und/oder des Behältnisses kann rechtsdrehend oder linksdrehend gewunden sein. Dadurch ist der Aufsatz bzw. das Behältnis für spezielle technische Anwendungen, die unterschiedliche Gewindelaufrichtungen benötigen, einsetzbar.

Erfindungsgemäß können die Stege an dem Aufsatz und/oder dem Behältnis auch entlang mehrerer koaxial zueinander verlaufender Schraubenlinien eines mehrgängigen Gewindes oder entlang von mehreren in axialer Richtung zueinander versetzen Schraubenlinienabschnitten eines eingängigen Gewindes angeordnet sein. Unter dem koaxialen Verlauf der Schraubenlinie zu einer Mittelachse der Außenwand bzw. der Schürze wird typischerweise die Übereinstimmung der Mittelachse der Schraubenlinie mit der Mittelachse der rundumlaufenden Außenwand bzw. der Schürze verstanden. Unter einer Schraubenlinie wird eine Spirale oder Wendel in Form einer Helix verstanden.

### Bevorzugte Ausführunasformen der Erfindung

Besonders bevorzugt ist eine Ausführungsform des Aufsatzes oder des Behältnisses, bei der die Außenwand des Aufsatzes bzw. das Behältnis in Umfangsrichtung eine Mehrzahl von rundumlaufenden Abschnitten aufweist, deren Stege jeweils einem gemeinsamen Schraubenlinienabschnitt folgen. Dadurch ist ein einfaches und schnelles Eindrehen des Aufsatzes oder des Behältnisses auf das jeweilige Gegengewinde möglich. Unter rundumlaufendem Abschnitt der Außenwand wird hier ein flächiger Randbogenbereich von beispielsweise 90° oder 120° entlang der Außenwand in Umfangsrichtung verstanden. Entsprechend wird unter rundumlaufendem Abschnitt des Behältnisses ebenfalls ein flächiger Randbogenbereich von z.B. 90° oder 120° an dem Behältnis, insbesondere an einer Schürze des Behältnisses, verstanden. Die Stege unterschiedlicher derartiger Abschnitte sind hierbei typischerweise unterschiedlichen Schraubenlinien eines mehrgängigen Gewindes zugeordnet, können aber ggf. auch mehreren Schraubenlinienabschnitten eines eingängigen Gewindes zugeordnet sein.

Besonders bevorzugt ist weiterhin eine Ausführungsform des Aufsatzes oder des Behältnisses, bei der sich die Stege, die entlang des ersten Schraubenlinienabschnitts verlaufen, und die Stege, die entlang des zweiten in axialer Richtung zum ersten Schraubenlinienabschnitt versetzten Schraubenlinienabschnitts verlaufen, in Umfangsrichtung abwechseln. Ein gemäß dieser Ausführungsform ausgebildeter Aufsatz bzw. ausgebildetes Behältnis weist einen besonders stabilen Sitz an dem jeweiligen Gegenstück auf und kann in axialer Richtung translatorisch entformt werden. Unter einem Schraubenlinienabschnitt wird im Sinne der Erfindung ein Segment einer Schraubenlinie verstanden, d.h. ein radialer Teilbereich der Schraubenlinie, der sich z.B. über 45° oder 60° erstreckt. Eine in Umfangsrichtung wechselweise Anordnung der Stege gemäß dieser Ausführungsform ergibt sich z.B. bei mehrgängigen Gewinden mit mehreren Schraubenlinien. Hier sind die wechselweise angeordneten Stege Schraubenlinienabschnitten unterschiedlicher Schraubenlinien zugeordnet. Es ist jedoch grundsätzlich auch möglich., dass die zueinander versetzten Schraubenlinienabschnitte einer gemeinsamen Schraubenlinie angehören.

Überlappen sich beispielsweise bei einem gemäß dieser Ausführungsform ausgebildeten Behältnis oder Aufsatz zwei Schraubenlinienabschnitte (Schraubenlinienabschnitte, die von einer zusammenhängenden Schraubenlinie oder von zwei ineinander liegenden Schraubenlinien stammen) in Umfangsrichtung, so ist in Umfangsrichtung gesehen zunächst ein erster Steg am ersten Schraubenlinienabschnitt ausgebildet, dann ein zweiter Steg am zweiten Schraubenlinienabschnitt, ein dritter Steg wiederum am ersten Schraubenlinienabschnitt usw. Dabei endet der erste Steg in Umfangsrichtung gesehen spätestens beim Beginn des zweiten Steges und der dritte Steg beginnt frühestens am Ende des zweiten Steges usw.

Ein weiteres Beispiel eines gemäß dieser Ausführungsform ausgebildeten Behältnisses oder Aufsatzes ist ein Behältnis oder Aufsatz mit drei in axialer Richtung benachbarten Schraubenlinienabschnitten (die wiederum von einer einzigen durchgehenden Schraubenlinie oder von z.B. drei ineinander liegenden unabhängigen Schraubenlinien stammen können) entlang derer die Stege in Umfangsrichtung entsprechend wechselweise angeordnet sind: Ein erster Steg verläuft entlang eines ersten Schraubenlinienabschnitts. Ein zweiter Steg verläuft hierbei entlang eines zweiten Schraubenlinienabschnitts, der zum ersten Schraubenlinienabschnitt axial versetzt ist, wobei der zweite Steg in Umfangsrichtung gegenüber dem ersten Steg versetzt ist und in Umfangsrichtung frühestens dort beginnt, wo der erste Steg endet. Ein dritter Steg verläuft entlang eines dritten Schraubenlinienabschnitts, der zum ersten und zweiten Schraubenlinienabschnitt axial versetzt ist, wobei der dritte Steg in Umfangsrichtung gegenüber dem ersten Steg und dem zweiten Steg versetzt ist, und wobei der dritte Steg in Umfangsrichtung frühestens dort beginnt, wo der zweite Steg endet. Ein vierter Steg verläuft dann wiederum entlang des ersten Schraubenlinienabschnitts, wobei dieser in Umfangsrichtung frühestens dort beginnt, wo der dritte Steg endet. Bei einer derartigen Anordnung der Stege am Behältnis sind Hinterschneidungen von Teilen von Stegen oder Stegen insgesamt in axialer Richtung (d.h. der Entformungsrichtung des Behältnisses) ausgeschlossen, obwohl die Ausbildung eines Gewindes an einem Behältnis ohne die Mehrzahl von segmentweise ausgebildeten Stegen, eine rotatorische Entformung bedingen würde.

Anders als in den beiden obigen Beispielen mit einer Zuordnung der Stege zu den zwei bzw. drei Schraubenlinienabschnitten in einer fest vorgegebenen, alternierenden Abfolge, ist es auch möglich, dass die Zuordnung der Stege zu den Schraubenlinienabschnitten nicht regelmäßig alternierend erfolgt, wobei insbesondere auch eine zufällige Zuordnung von aufeinander folgenden Stegen zu den Schraubenlinienabschnitten gewählt werden kann.

Bevorzugt ist eine Ausführungsform des Behältnisses, bei der das Behältnis im Bereich der Öffnung eine rundumlaufende Schürze aufweist, bei der die radial nach Außen hervorstehenden Stege an der Schürze ausgebildet sind, und bei der eine Mittelachse der Schraubenlinie koaxial zu einer Mittelachse der Schürze verläuft. Eine Schürze verleiht dem Behältnis eine größere Stabilität und Steifigkeit, insbesondere im Bereich der Öffnung des Behältnisses. Somit ist eine sichere Verschraubung möglich, ohne dass sich das Behältnis zu sehr verformt. Die Schürze kann bei dieser Ausführungsform des Behältnisses zylindrisch oder konisch ausgebildet sein.

Bevorzugt ist auch eine Weiterbildung der vorgehenden Ausführungsform, bei der die Schürze einen radial nach Außen verlaufenden Wandabschnitt aufweist, bei der an der Schürze eine Mehrzahl von Durchbrüchen ausgebildet ist, die sich teilweise in den radial nach Außen verlaufenden Wandabschnitt erstrecken, bei der die Stege im Bereich der Durchbrüche ausgebildet sind, und bei der die radiale Erstreckung der Stege bevorzugt höchstens der radialen Erstreckung der Durchbrüche im radial nach Außen verlaufende Wandabschnitt entspricht.

Da sich die wendelartig verlaufenden bzw. angeordneten und somit ein Gewinde ausbildenden Stege höchstens so weit radial nach Außen, d.h. von der Mittelachse des Behältnisses weg, erstrecken wie die Teile des Durchbruchs, die sich in den ebenfalls radial nach Außen ausgerichteten Wandabschnitt erstrecken, ist das Behältnis in axialer Richtung hinfierschneidungsfrei ausgebildet. Um die Hinterschneidungsfreiheit beim Behältnis zu garantieren, sind die typischerweise im Bereich eines jeweiligen, sich in Umfangsrichtung erstreckenden Randes der Durchbrüche ausgebildeten Stege auf der Außenseite der Schürze in den Bereichen zwischen zwei Durchbrüchen nicht durchgehend ausgebildet, sodass sich durch die spindelartig entlang der Schraubenlinie angeordneten Stege eine Gewindespitze ausbildet, die in Schraubenlinienrichtung entsprechend der Anzahl an Stegen bzw. der Anzahl an Durchbrüchen mehrfach unterbrochen ist. Die an dem Behältnis ausgebildeten Durchbrüche sind Löcher bzw. Ausnehmungen in der jeweiligen Wand, also der Schürze des Behältnisses. Der radial nach Außen verlaufende Wandabschnitt der Schürze kann selbstverständlich auch nur mit einer Komponente radial nach Außen zeigen, also insbesondere auch in axialer Richtung schräg radial nach Außen verlaufen.

Ebenfalls bevorzugt ist eine Ausführungsform des Behältnisses, bei der an dem der Öffnung des Behältnisses abgewandten Ende der mindestens einen Schraubenlinie mindestens ein Anschlag für einen Steg eines Aufsatzes vorgesehen ist. Ein spezieller Aufsatz mit mehreren nach Innen hervorragenden Stegen, die in einer zur Mittelachse des Aufsatzes senkrechten Ebene ausgebildet sind, kann dann in das Behältnis gemäß dieser Ausführungsform in der Art eines Bajonettverschlusses eingedreht werden, bis der oder die Stege an dem Anschlag oder an den Anschlägen anstoßen. Weist das Behältnis mehrere (z.B. vier) Schraubenlinienabschnitte auf, die gleichmäßig über die runde Öffnung des Behältnisses verteilt sind und weist der spezielle Aufsatz entsprechend z.B. vier Stege auf, so kann der spezielle Aufsatz auf das gemäß dieser Ausführungsform ausgebildete Behältnis aufgedreht werden und kommt am Ende der jeweiligen Schraubenlinienabschnitte zu einem definierten Anschlag. Die Länge der an dem speziellen Aufsatz ausgebildeten Stege ist hierfür typischerweise größer als die jeweiligen Zwischenbereiche (Abstände) zwischen zwei Stegen am Behältnis, sodass beim Eindrehen des speziellen Aufsatzes auf das Behältnis der Aufsatz nicht durch die Zwischenbereiche hindurchrutschen kann. Die Schraubenlinienabschnitte zur Führung der Stege des Aufsatzes können lediglich entlang eines Abschnitts einer vollen Umdrehung (360°) verlaufen oder sich über eine volle Umdrehung (360°) hinaus erstrecken, sodass sich die Schraubenlinienabschnitte teilweise überlappen.

Verlaufen die unmittelbar vor dem oder den Anschlägen des Behältnisses ausgebildeten Stege nicht in Schraubenlinienrichtung, sondern zumindest in einem Teilabschnitt ausschließlich in Umfangsrichtung, so wird die Gefahr eines Zurückdrehens des Aufsatzes aus einer eingedrehten Position, bei der die Stege an dem Anschlag anliegen, verringert. Bevorzugt sind die Stege des Aufsatzes von der Deckelfläche des Aufsatzes etwas weniger weit beabstandet als der Rand der Öffnung des Behältnisses von dem in Umfangsrichtung des Behältnisses verlaufenden Teil der Stege, so dass bei einem Einschrauben des Aufsatzes bis zu den Anschlägen des Behältnisses der Aufsatz und das Behältnis gegeneinander sichernd verspannt werden.

Die Stege des Aufsatzes und/oder des Behältnisses weisen bevorzugt im Radialschnitt eine runde und/oder eine sägezahnartige und/oder eine trapezartige Form auf. Diese Steggeometrien haben sich in der Praxis bewährt. Die Querschnittsgeometrie des Steges kann auch die Form eines Flachgewindes annehmen. Grundsätzlich sind beliebige Formen der Stege im Radialschnitt möglich. Die Stege können auch derart ausgebildet sein, dass sie eine Vorspannung aufweisen. Es ist ebenfalls denkbar, dass nicht alle Stege eines Aufsatzes oder Behältnisses die gleiche Form aufweisen, oder dass unterschiedlich ausgebildete Stege am Aufsatz und am Behältnis ausgebildet sind.

Bei einer anderen bevorzugten Ausführungsform weisen die Stege insbesondere als Widerhaken ausgebildete Rückhaltevorrichtungen zum irreversiblen Verschrauben eines Aufsatzes mit einem Behältnis oder umgekehrt auf. Die Rückhaltevorrichtungen erlauben die gegenseitige irreversible Sicherung eines erfindungsgemäßen Behältnisses gegen einen erfindungsgemäßen Aufsatz beim Verschrauben, wobei gegebenenfalls die Ausbildung von Rückhaltevorrichtungen entweder am Aufsatz oder am Behältnis genügt. Dabei erlauben die Widerhaken bzw. Rückhaltevorrichtungen zunächst ein Vorbeiführen des Aufsatzes am Behältnis in der Schließrichtung. In der entgegengesetzten Richtung verhindern die Rückhaltevorrichtungen hingegen ein Verdrehen des Aufsatzes gegenüber dem Behältnis.

Weist das Behältnis einen rundumlaufende Aufsetzrand auf, der sich von der Behältniswand radial nach Außen erstreckt und auf dem ein Aufsatz im verschraubten Zustand mit seinem unteren Rand zu liegen kommt, so kann ein solcher Aufsatz, der an den Stegen ausgebildete Rückhaltevorrichtungen aufweist, derart kraftvoll auf dieses Behältnis aufgeschraubt werden, dass das Behältnis und der Aufsatz irreversibel gegeneinander verspannt sind. Die Rückhaltevorrichtungen verhindern dann ein Lösen des Aufsatzes von dem Behältnis aus diesem Zustand. Eine derartige gegenseitige Verspannung ist auch bei Behältnissen ohne einen rundumlaufenden Aufsetzrand möglich. Wird der Aufsatz geringfügig über den Verschraubungszustand hinaus gedreht, an dem der Aufsatz mit seiner Deckelfläche an dem rundumlaufende oberen Behältnisrand anschlägt, so werden das Behältnis und der Aufsatz ebenfalls gegeneinander verspannt.

Bevorzugt ist des Weiteren eine Ausführungsform des Aufsatzes bzw. des Behältnisses, bei der die Stege insbesondere als Widerhaken ausgebildete Rückhaltevorrichtungen zum Zurückhalten eines mit dem Behältnis verschraubten Aufsatzes entgegen der Schließrichtung aufweisen, wobei die Rückhaltevorrichtungen durch Aufbringen eines Drucks oder Zugs in radialer Richtung lösbar sind. Auch der gemäß dieser Ausführungsform ausgebildete Aufsatz bzw. das gemäß dieser Ausführungsform ausgebildete Behältnis kann hierbei translatorisch entformbar bleiben. Es versteht sich, dass die Rückhaltevorrichtungen beim Aufbringen eines Drucks oder Zugs einen Rückhalt des Aufsatzes am Behältnis lösen können und hierbei nicht selbst vom Behältnis oder Aufsatz gelöst werden.

Die Rückhaltevorrichtungen sind z.B. als Widerhaken an den Stegen eines Aufsatzes oder Behältnisses ausgebildet, wobei die Dicke der Widerhaken in radialer Richtung gegenüber der radialen Erstreckung der Stege verringert, insbesondere nahezu halbiert ist. Die somit dünn ausgebildeten Widerhaken sind am Behältnis derart angeordnet, dass sie jeweils bündig zur Außenseite der Stege verlaufen. Dadurch bilden sich zwischen den dünnen Widerhaken und der Behältniswand bzw. zwischen den dünnen Widerhaken und einer Schürze des Behältnisses in radialer Richtung Freiräume aus. Am Aufsatz sind die dünnen Widerhaken so angeordnet, dass sie jeweils bündig zur Innenseite der Stege verlaufen. Somit bilden sich auch hier in radialer Richtung Freiräume zwischen den dünnen Widerhaken und den Durchbrüchen an der Außenwand des Aufsatzes aus.

Wird ein derartiger Aufsatz mit dünnen Widerhaken auf ein Behältnis mit dünnen Widerhaken aufgeschraubt, so rasten die Widerhaken bei Überschreitung einer bestimmten Drehstellung zunächst ineinander ein. In diesem Zustand liege die Widerhaken über Anlageflächen aneinander an und können nicht ohne weiteres aneinander vorbeibewegt werden. Erst durch lokales Eindrücken des Aufsatzes an der Stelle, an der der Steg mit dünnen Widerhaken ausgebildet ist, gleiten die Anlageflächen aneinander vorbei, sodass die Widerhaken des Aufsatzes in die Behältnis-Freiräume und die Widerhaken des Behältnisses in die Aufsatz-Freiräume eingreifen und ein Aufdrehen des Aufsatzes entgegen den Schließrichtung wieder möglich wird. Hierzu müssen die Stege am Aufsatz gegenüber der Behältnisaußenwand, sowie die Stege an der Behältnisaußenwand gegenüber der Aufsatzinnenwand genügend Zwischenraum lassen, um ein lokales Eindrücken ermöglichen zu können.

Typischerweise sind Stege mit derartigen dünnen bzw. schmalen Rückhaltevorrichtungen an dem Aufsatz bzw. Behältnis diametral gegenüberliegend ausgebildet. In diesem Fall muss zum Öffnen eines verschlossenen Behältnisses an diesen beiden Stellen des Aufsatzes radial nach Innen gedrückt werden, um die Kindersicherung zu lösen und anschließend eine Drehbewegung des Aufsatzes durchzuführen.

Der Aufsatz und/oder das Behältnis können aus Low Density Polyethylen (LDPE), High Density Polyethylen (HDPE), Polypropylen (PP) oder einem anderen Kunststoff gefertigt sein. Werden diese Kunststoffe aus der Familie der Polyolefine eingesetzt, so erhalten der Aufsatz bzw. das Behältnis viele vorteilhafte Eigenschaften, wie z.B. eine große Beständigkeit durch hohe Zähigkeits- und Reißdehnungswerte sowie ein gutes Gleitverhalten bei gleichzeitig sehr geringer Wasseraufnahme.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Zeichnung und detaillierte Beschreibung der Erfindung

Die Erfindung ist in den Zeichnungen dargestellt und wird anhand von Ausführungsbeispielen näher erläutert. Es zeigt:
- Fig. 1: einen erfindungsgemäßen Aufsatz in einer Seitenansicht;
- Fig. 2: den Aufsatz aus Fig. 1 in der Draufsicht;
- Fig. 3: den Aufsatz aus Fig. 1 in einer perspektivischen Unteransicht; und
- Fig. 4: den Aufsatz aus Fig. 1 in einer perspektivischen Draufsicht.
- Fig. 5: ein erfindungsgemäßes Behältnis und ein erfindungsgemäßer Aufsatz in einer Seitenansicht;
- Fig. 6: ein erfindungsgemäßes Behältnis mit einer Schürze und dem Aufsatz aus Fig. 5 in einer Seitenansicht;
- Fig. 7: ein erfindungsgemäßes Behältnis mit einem Aufsetzrand sowie dem Aufsatz aus Fig. 5;
- Fig. 8: ein erfindungsgemäßes Behältnis mit einer konischen Schürze in einer Seitenansicht;
- Fig. 9: einen erfindungsgemäßen Aufsatz und ein erfindungsgemäßes Behältnis mit Rückhaltevorrichtungen;
- Fig. 10: einen erfindungsgemäßen Aufsatz und ein erfindungsgemäßes Behältnis mit einer Kindersicherung;
- Fig. 11: einen Ausschnitt des Aufsatzes aus Fig. 10; und
- Fig. 12: einen Ausschnitt des Behältnisses aus Fig.10.

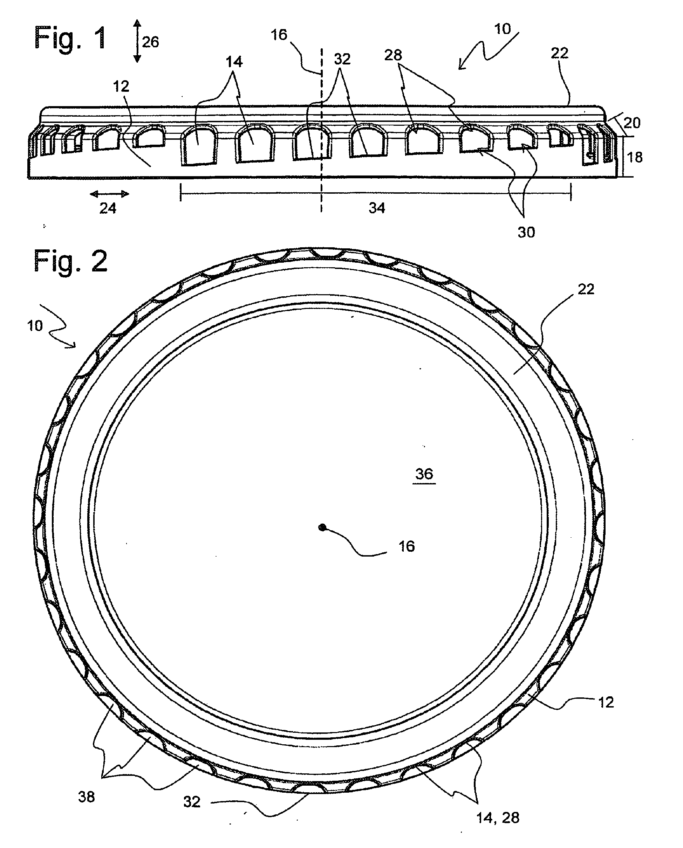

In der **Fig. 1** ist mit 10 ein Aufsatz gekennzeichnet, der an seiner runden Außenwand 12 eine Mehrzahl von Durchbrüchen 14 aufweist. Die Außenwand 12 umfasst einen parallel zur Mittelachse 16 der runden Außenwand 12 verlaufenden ersten Wandabschnitt 18 und einen teilweise radial nach Innen (zumindest mit einer Radialkomponente zur Mittelachse 16 hin) ausgerichteten zweiten Wandabschnitt 20. Der zweite Wandabschnitt 20 schließt unmittelbar an einen oberen ringförmigen Deckelwandabschnitt 22 an.

Die Durchbrüche 14 stellen Löcher in der Außenwand 12 dar, die sich in Umfangsrichtung 24 und in axialer Richtung 26 (parallel zur Mittelachse 16) erstrecken, wobei sich die Durchbrüche 14 sowohl in den ersten Wandabschnitt 18 als auch in den zweiten Wandabschnitt 20 hinein erstrecken. Die Durchbrüche 14 in der Fig. 1 sind an ihren oberen Enden 28 alle gleich weit von dem ringförmigen Deckelwandabschnitt 22 entfernt. An ihren unteren Enden 30 weisen die Durchbrüche 14 geradlinige Ränder 32 auf, die in axialer Richtung 26 unterschiedlich weit von dem Deckelwandabschnitt 22 beabstandet angeordnet sind. Die Gesamtheit mehrerer Ränder 32, die in einem Abschnitt 34 (Randabschnitt) der Außenwand 12 nebeneinander liegen, bildet einen Schraubenlinienabschnitt einer wendelförmigen Schraubenlinie, wobei die Ränder 32 nicht parallel zum Deckelwandabschnitt 22 verlaufen, sondern schräg zu diesem und hierbei der Steigung der wendelförmigen Schraubenlinie folgen.

Die **Fig. 2** zeigt den Aufsatz 10 in der Draufsicht. Dadurch sind der ringförmige Deckelwandabschnitt 22 und eine zentrale Deckelfläche 36 des Aufsatzes 10 sowie die Durchbrüche 14, insbesondere ihre oberen bogenförmigen Enden 28, ersichtlich. Des Weiteren ist in der Fig. 2 die kreisrunde Form der Außenwand 12 dargestellt. Darüber hinaus sind in der Draufsicht Stege 38 erkennbar, die an die Außenwand 12 im Bereich der Ränder 32 der Durchbrüche 14 angeformt sind und die radial ins Innere (zum Zentrum bzw. zur Mittelachse 16) des Aufsatzes 10 zeigen.

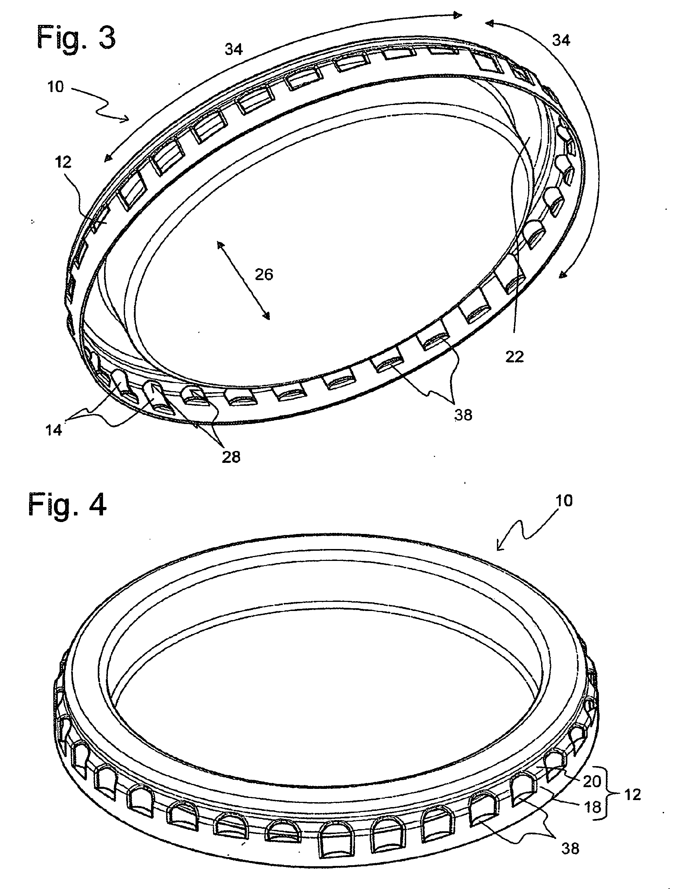

Die **Fig. 3** zeigt den Aufsatz 10 in einer perspektivischen Unteransicht. Hierbei sind Stege 38 ersichtlich, die an der Außenwand 12 ausgebildet sind und entlang von Schraubenlinienabschnitten unterschiedlicher Schraubenlinien eines mehrgängigen Gewindes angeordnet sind. Einander bezüglich der Umfangsposition entsprechende Stege 38 in den jeweiligen Abschnitten 34 (z.B. der dritte Steg 38 eines ersten Abschnitts 34 und der dritte Steg 38 eines zweiten Abschnitts 34) sind hierbei auf gleicher Höhe angeordnet, d.h. sie weisen denselben Abstand zum Deckelwandabschnitt 22 auf. Es versteht sich, dass die jeweilige Gesamtheit der Stege 38 unterschiedlicher Abschnitte 34 alternativ auch in axialer Richtung zueinander versetzt sein kann, wenn die Abschnitte 34 unterschiedlichen Schraubenlinienabschnitten derselben Schraubenlinie eines eingängigen Gewindes zugeordnet sind.

Unabhängig davon, ob der Aufsatz 10 wie im vorliegenden Beispiel in unterschiedliche Abschnitte 34 eingeteilt ist oder nicht, können sich Stege 38, die entlang eines ersten Schraubenlinienabschnitts verlaufen, und Stege 38, die entlang eines zweiten in axialer Richtung zum ersten Schraubenlinienabschnitt versetzten Schraubenlinienabschnitts verlaufen, in Umfangsrichtung abwechseln.

Die Stege 38, die wegen des Ausmaßes und der Form der Erstreckung der oberen Enden 28 der jeweils zugehörigen Durchbrüche 14 in den radial nach Innen verlaufenden Wandabschnitt 20 bei einer Entformung in axialer Richtung 26 keine Hinterschneidung darstellen, können als Innengewinde genutzt werden und mit einem entsprechenden Gegengewinde eines anderen Bauteils (typischer Weise eines Behälters) zusammenwirken. Die Stege 38 weisen in einem in radialer Richtung geführten Querschnitt eine Trapezform auf. Rechteckige, runde, oder sägezahnartige Querschnittsformen sind jedoch ebenso möglich.

Der Übergang in der Außenwand 12 des Aufsatzes 10 von einem ersten, kreisrunden Wandabschnitt 18 in einen zweiten radial nach Innen ausgerichteten Wandabschnitt 20 ist in der Perspektive der **Fig. 4** gut zu erkennen. Auch hier zeigt sich die schraubenlinienartige Anordnung der Stege 38. Der Aufsatz ist beispielsweise aus Low Density Polyethylen (LDPE), High Density Polyethylen (HDPE), Polypropylen (PP) oder einem anderen Kunststoff gefertigt.

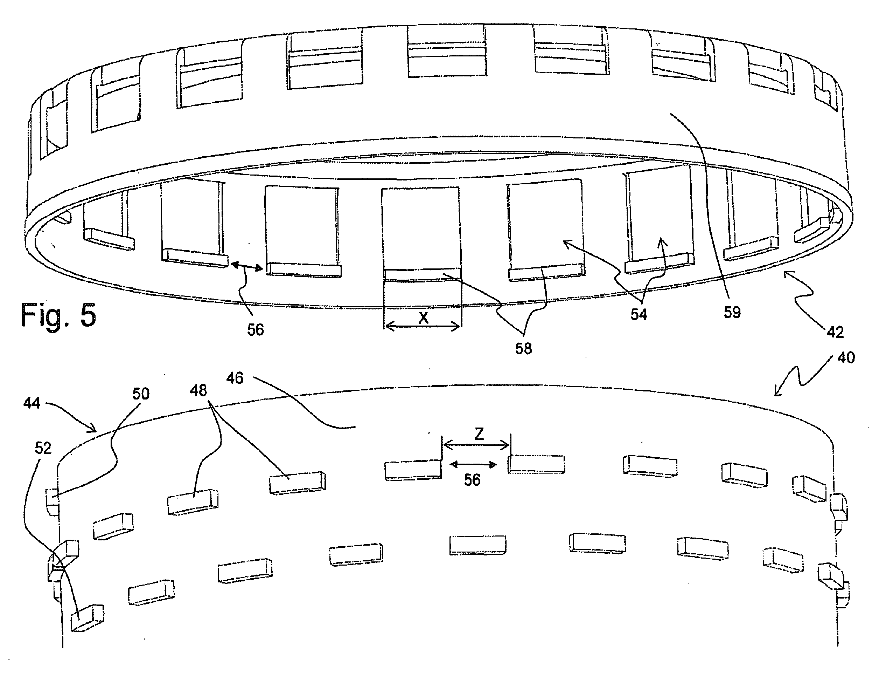

In der **Fig. 5** ist ein Behältnis 40 und ein Aufsatz 42 gezeigt, wobei das Behältnis 40 eine mittels des Aufsatzes 42 verschließbare Öffnung 44 aufweist, und wobei im Bereich der Öffnung 44 radial nach Außen hervorstehende Stege 48 ausgebildet sind, die entlang einer Schraubenlinie verlaufen. Das Behältnis 40 und der Aufsatz 42 sind in einem nicht verschraubten Zustand dargestellt. Das Behältnis 40 umfasst eine rundumlaufende zylindrische Behältniswand 46, an der die Stege 48 radial nach Außen zeigend ausgebildet sind. Die Stege 48 sind in der Fig. 5 entlang einer durchgehenden Schraubenlinie angeordnet, wobei diese Schraubenlinie zwei volle Umdrehungen (2 x 360°) von einem der Öffnung 44 zugewandten Anfangssteg 50 bis zu einem der Öffnung 44 abgewandten Endsteg 52 aufweist. Die Stege 48, 50, 52 sind in Schraubenlinienrichtung 56 jeweils durch einen identischen Abstand Z voneinander beabstandet.

Der Aufsatz 42 weist im Unterschied zu dem Aufsatz der Fign. 1 bis 4 eine einzige durchgehende Schraubenlinie auf. Entlang dieser Schraubenlinie sind Stege 58 am Aufsatz 42 angeordnet, wobei analog zu den Fign. 1 bis 4 jeweils Durchbrüche 54 in einer Außenwand 59 des Aufsatzes 42 ausgebildet sind. Die entlang der Schraubenlinie verlaufenden Stege 58 sind jeweils in Schraubenlinienrichtung 56 voneinander beabstandet und weisen in Umfangsrichtung eine Länge X auf. Die Schraubenlinienrichtung 56 ist der Richtungsvektor einer an die Schraubenlinie angelegten Tangente und unterscheidet sich somit - wenn auch nur geringfügig - von der Umfangsrichtung.

Um ein Eindrehen des Aufsatzes 42 in das Behältnis 40 sicherzustellen, ist die Steglänge X größer als der Abstand Z. Mit anderen Worten: Die Stege 58 des Aufsatzes 42 sind typischerweise länger als die Zwischenräume zwischen den Stegen 48 des Behältnisses 40, sodass ein Verlieren des Aufsatzes 42 durch ein Hindurchrutschen der Stege 58 in axialer Richtung unmöglich ist. Dies kann selbstverständlich ebenso erreicht werden, wenn die Stege 48 an dem Behältnis 40 länger sind als die Zwischenräume zwischen Stegen 58 des Aufsatzes 42.

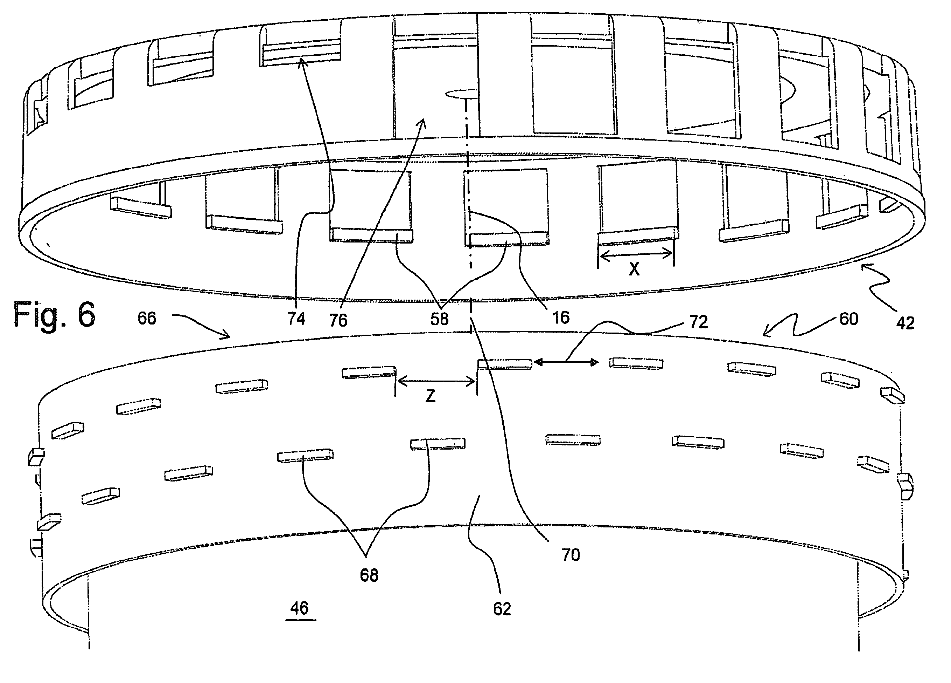

In der **Fig. 6** ist ein Behältnis 60 mit einer Schürze 62 in einer Seitenansicht dargestellt. Die Schürze 62 dient der Stabilisierung des Behältnisses 60, ist koaxial zur Behältniswand 46 ausgebildet und weist eine zylindrische Form auf. Die Schürze 62 ist rundumlaufend im Bereich einer Öffnung 66 des Behältnisses 60 ausgebildet und an die Behältniswand 46 angeformt. An der Schürze 62 des Behältnisses 60 sind Stege 68 entlang einer durchgehenden Schraubenlinie angeordnet, die sich analog zu der Schraubenlinie in Fig. 5 entlang von zwei vollen Umdrehungen (2 x 360°) erstreckt und die koaxial zu einer Mittelachse 70 der Schürze 62 verläuft. Die Stege 68 sind in Schraubenlinienrichtung 72 ebenfalls regelmäßig durch einen Zwischenraum (Abstand) der Länge Z voneinander beabstandet.

Des Weiteren ist in der Fig. 6 der Aufsatz 42 aus der Fig. 5 dargestellt, wobei der Aufsatz 42 gegenüber der Darstellung in Fig. 5 eine Viertel-Umdrehung um seine Mittelachse 16 gedreht wurde. Dadurch wird der axiale Versatz des Beginns und des Endes der Schraubenlinie anhand der unterschiedlichen axialen Erstreckung zweier benachbarter Durchbrüche 74, 76 sichtbar. Die Längen X der Stege 58 des Aufsatzes 42 sind analog zu Fig. 5 größer als die Abstände Z zwischen den Stegen 68 am Behältnis 60.

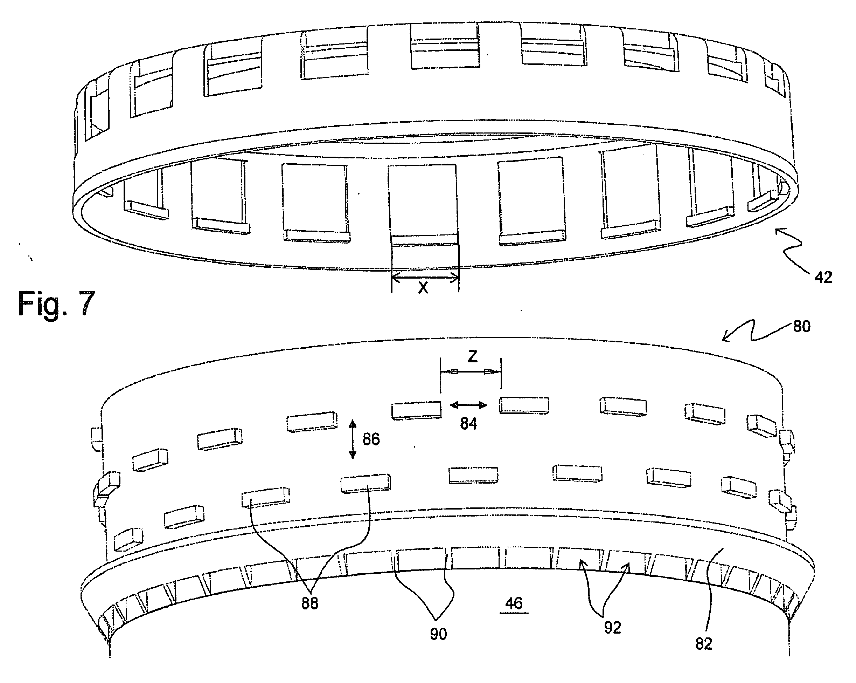

In der **Fig. 7** ist ein erfindungsgemäßes Behältnis 80 mit einem Aufsetzrand 82 für einen Aufsatz 42 dargestellt. Der Aufsatz 42 entspricht dem Aufsatz aus der Fig. 5. An der Behältniswand 46 des Behältnisses 80 sind Stege 88 entlang einer durchgehenden Schraubenlinie angeordnet, wobei sich die Schraubenlinie entlang von zwei vollen Umdrehungen (2x 360°) erstreckt. Die Stege 88 sind in Schraubenlinienrichtung 84 durch Zwischenräume der Länge Z voneinander beabstandet, wobei die Stege 88 eines ersten Schraubenlinienabschnitts bezüglich den Stegen 88 des zweiten, in axialer Richtung 86 versetzten Schraubenlinienabschnitts in Schraubenlinienrichtung 84 wechselweise zueinander versetzt sind. Somit überlappen sich die Stege 88 der unterschiedlichen Schraubenlinienabschnitte nicht in Umfangsrichtung.

Zusätzlich weist das Behältnis 80 an seiner Behältniswand 46 den rundumlaufenden Aufsetzrand 82 auf, der sich von der Behältniswand 46 radial nach Außen erstreckt, an seiner Oberseite eine plane Auflagefläche für den Aufsatz 42 bildet und nach unten konisch zuläuft. Der Aufsetzrand 82 ist über Radialstege 90 an die Behältniswand 46 angeformt und bildet zwischen den Radialstegen 90 Durchbrüche 92 aus, die in axialer Richtung 86 gesehen mindestens die radiale Erstreckung und mindestens die Umfangserstreckung der Stege 88 des Behältnisses 80 aufweisen. Somit ist das Behältnis 80 trotz des Aufsetzrandes 82 und trotz der Stege 88 hinterschneidungsfrei ausgebildet. An dem Aufsetzrand 82 kann der eingedrehte Aufsatz 42 mittels Verschraubens gegenüber dem Behältnis 80 sichernd verschraubt werden. Durch das Eindrehen des Aufsatzes 42 gegen den Widerstand des Aufsetzrandes 82 und der Stege 88 (Reibwiderstand) wird der Aufsatz 42 keilartig zwischen die Stege 88 und den Aufsetzrand 82 getrieben und verspannt somit den Aufsatz 42 und das Behältnis 80.

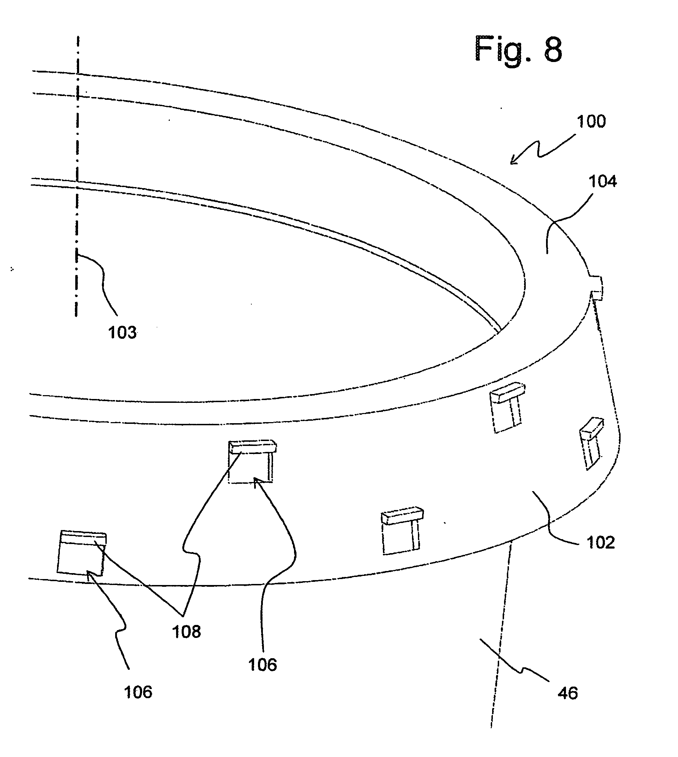

Die **Fig. 8** zeigt den Ausschnitt eines Behältnisses 100 mit einer konischen Schürze 102, die über einen Ringflansch 104 an die Behältniswand 46 angeformt ist. An der konischen Schürze 102 sind Stege 108 ausgebildet, die radial nach Außen (von der Mittelachse 103 der Schürze 102 weg) gerichtet sind und entlang einer Schraubenlinie angeordnet sind, wobei die Schraubenlinie ebenfalls konisch zuläuft. Unterhalb der Stege 108 sind Durchbrüche 106 durch die konische Schürze 102 zu erkennen, die ein hinterschneidungsfreies Entformen auch bei einer konisch geformten Schürze 102 erlauben.

Wie der Aufsatz kann auch das Behältnis beispielsweise aus Low Density Polyethylen (LDPE), High Density Polyethylen (HDPE), Polypropylen (PP) oder einem anderen Kunststoff gefertigt sein.

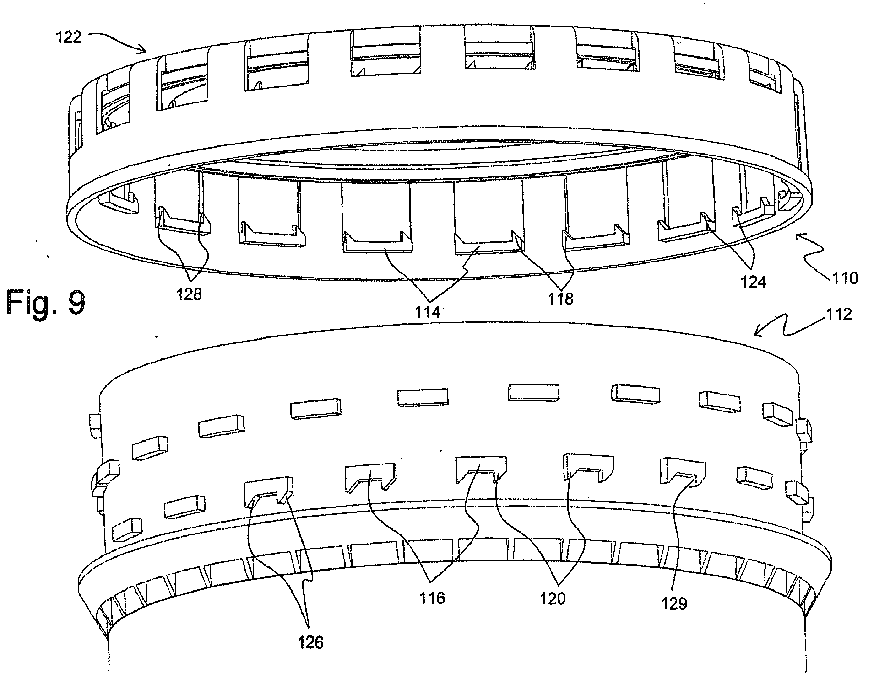

In der **Fig. 9** ist ein Aufsatz 110 und ein Behältnis 112 in einem nicht verschraubten Zustand dargestellt. Der Aufsatz 110 und das Behältnis 112 weisen an ihren Stegen 114,116 als Widerhaken 118,120 ausgebildete Rückhaltevorrichtungen auf. Dabei sind die Widerhaken 118 des Aufsatzes 110 derart an die Stege 114 angeformt, dass sie nach oben, d.h. zur Aufsatzoberseite 122 hin, ausgerichtet sind, wohingegen die Widerhaken 120 des Behältnisses 112 derart an die Stege 116 angeformt sind, dass sie nach unten zu einem nicht dargestellten Behältnisboden hin ausgerichtet sind. Die jeweiligen schrägen Flächen 124,126 der Widerhaken 118,120 sind so ausgerichtet, dass sie zunächst ein Vorbeiführen bzw. Vorbeigleiten des Aufsatzes 110 am Behältnis 112 beim Verschrauben in einer in Umfangsrichtung verlaufenden Schließrichtung erlauben. In der entgegengesetzten Richtung verhindern in axialer Richtung ausgerichtete Seitenflächen 128,129 der Widerhaken 118,120 ein Zurückdrehen des Aufsatzes 110 gegenüber dem Behältnis 112 und sichern die dauerhafte Verschraubung des Aufsatzes 110.

Die Rückhaltevorrichtungen, insbesondere die Widerhaken 118,120, können beispielsweise an nur einem Steg 114, 116 des Aufsatzes 110 oder des Behältnisses 112 ausgebildet sein, oder auch an mehreren Stegen 114,116 des Aufsatzes 110 oder des Behältnisses 112. Es ist ebenfalls möglich, dass an einem Steg 114,116 nur ein Widerhaken 118,120 oder auch mehr als zwei Widerhaken 118,120 vorgesehen sind.

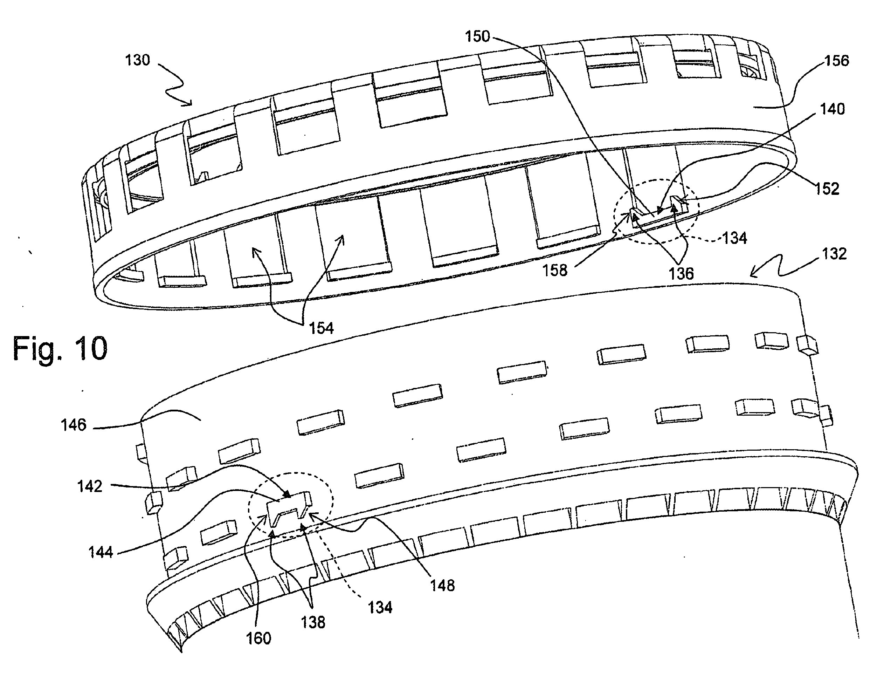

In der **Fig. 10** ist ein Aufsatz 130 und ein Behältnis 132 mit einer Kindersicherung in Form eines Drück-Drehverschlusses 134 dargestellt., der an jeweils einem Steg 140, 142 des Aufsatzes 130 bzw. des Behältnisses 132 gebildet ist. Bei dem Drück-Drehverschluss 134 sind Widerhaken 136,138 an den Stegen 140,142 des Aufsatzes 130 und des Behältnisses 132 ausgebildet, deren Dicke in radialer Richtung gegenüber der radialen Erstreckung der Stege 140,142 näherungsweise halbiert ist. Die dünnen Widerhaken 136,138 sind am Behältnis 132 derart angeordnet, dass sie jeweils bündig mit der Außenseite 144 der Stege 142 abschließen. Dadurch bilden sich zwischen den dünnen Widerhaken 138 und der Behältniswand 146 in radialer Richtung Freiräume 148 aus. Am Aufsatz 130 sind die dünnen Widerhaken 136 so angeordnet, dass sie ebenfalls jeweils bündig mit der Innenseite 150 der Stege 136 abschließen. Somit bilden sich auch hier in radialer Richtung Freiräume 152 zwischen den dünnen Widerhaken 136 und den Durchbrüchen 154 an der Außenwand 156 des Aufsatzes 130 aus.

Wird ein derartiger Aufsatz 130 mit dünnen Widerhaken 136 auf ein Behältnis 132 mit dünnen Widerhaken 138 aufgeschraubt (in Fig. 10 nicht dargestellt), so rasten die Widerhaken 136, 138 bei Überschreitung einer bestimmten Drehstellung zunächst ineinander ein. In diesem Zustand liegen die Widerhaken 136,138 über in axialer Richtung verlaufende Anlageflächen 158,160 aneinander an und können nicht ohne weiteres aneinander vorbeibewegt werden (gesicherter Zustand).

Erst durch lokales, radial nach Innen gerichtetes Eindrücken des Aufsatzes 130 an den Stellen, an denen die Stege 140 mit den dünnen Widerhaken 136 ausgebildet sind, gleiten die Anlageflächen 158, 160 aneinander vorbei, sodass die Widerhaken 136 des Aufsatzes 130 in die Freiräume 148 des Behältnisses 132 verschoben werden und die Widerhaken 138 des Behältnisses 132 in die Freiräume 152 des Aufsatzes 130 eingreifen. Auf diese Weise wird ein Aufdrehen des Aufsatzes 130 entgegen der Schließrichtung ermöglicht.

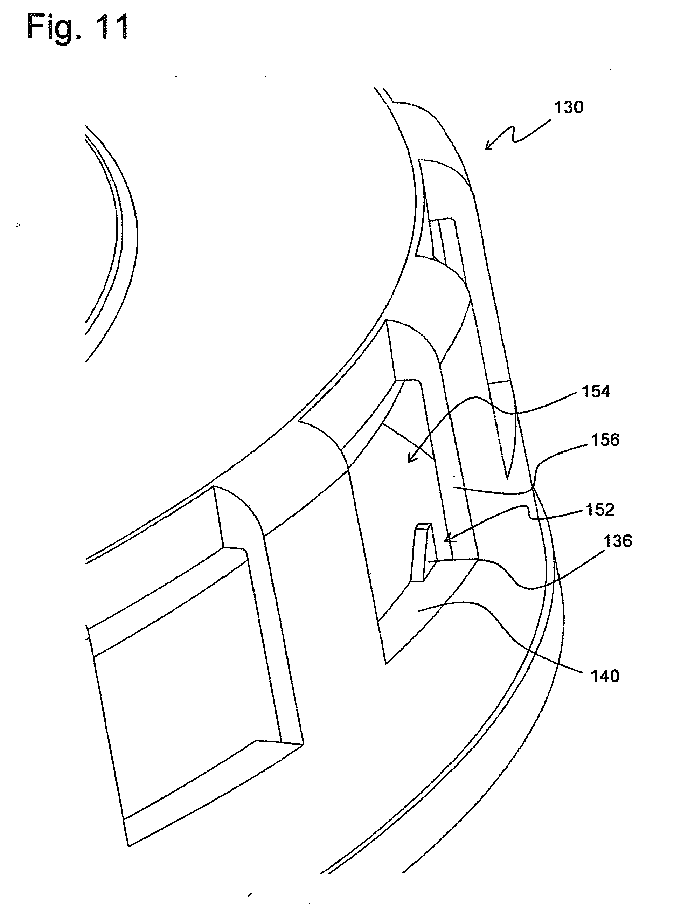

In der **Fig. 11** ist ein Ausschnitt des Aufsatzes 130 aus der Fig. 10 gezeigt. Durch den Durchbruch 154 am Aufsatz 130 ist ein Steg 140 sichtbar, an dem ein dünner Widerhaken 136 ausgebildet ist. Durch die Anordnung des dünnen Widerhakens 136 am innenliegenden Ende des Steges 140 ergibt sich der Freiraum 152 zwischen dem dünnen Widerhaken 136 und der Außenwand 156 des Aufsatzes 130.

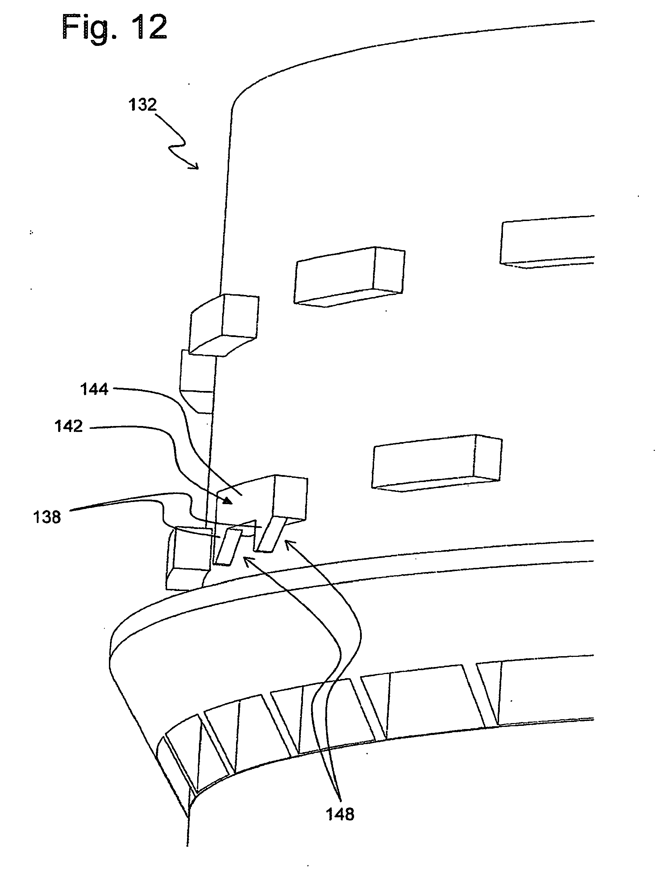

In der **Fig. 12** ist ein Ausschnitt des Behältnisses 132 aus Fig. 10 dargestellt. Es ist hierbei ersichtlich, dass die dünnen Widerhaken 138 am Behältnis 132 bündig mit der Außenseite 144 der Stege 142 abschließend an die Stege 142 angeformt sind. Dadurch bilden sich zwischen den dünnen Widerhaken 138 und der Behältniswand 146 in radialer Richtung die Freiräume 148 aus.

## Patentansprüche

1. Aufsatz (10;42;120;130) für ein Behältnis, umfassend eine rundumlaufende Außenwand (12,59) mit einem radial nach Innen verlaufenden Wandabschnitt (20), wobei an der Außenwand (12,59) eine Mehrzahl von Durchbrüchen (14) ausgebildet ist, die sich teilweise in den radial nach Innen verlaufenden Wandabschnitt (20) erstrecken, und wobei im Bereich der Durchbrüche (14), radial nach Innen hervorstehende Stege (38,58) ausgebildet sind, wobei bevorzugt die radiale Erstreckung der Stege (38,58) höchstens der radialen Erstreckung der Durchbrüche (14) im radial nach Innen verlaufenden Wandabschnitt (20) entspricht,
**dadurch gekennzeichnet,**
**dass** die Stege (38,58) entlang mindestens einer Schraubenlinie verlaufen, wobei eine Mittelachse der Schraubenlinie koaxial zu einer Mittelachse (16) der Außenwand (12,59) verläuft, und dass sich Stege (38), die entlang eines ersten Schraubenlinienabschnitts verlaufen, und Stege (38), die entlang eines zweiten in axialer Richtung zum ersten Schraubenlinienabschnitt versetzten Schraubenlinienabschnitts verlaufen, in Umfangsrichtung (24) nicht überlappen.

2. Aufsatz (10;42;120;130) nach Anspruch 1, **dadurch gekennzeichnet, dass** die Außenwand (12) in Umfangsrichtung eine Mehrzahl von rundumlaufenden Abschnitten (34) aufweist, an denen Stege (38) vorgesehen sind, die jeweils einem gemeinsamen Schraubenlinienabschnitt folgen.

3. Aufsatz (10;42;120;130) nach Anspruch 1 oder 2, **dadurch gekennzeichnet, dass** sich die Stege (38), die entlang des ersten Schraubenlinienabschnitts verlaufen, und die Stege (38), die entlang des zweiten in axialer Richtung zum ersten Schraubenlinienabschnitt versetzten Schraubenlinienabschnitts verlaufen, in Umfangsrichtung (24) abwechseln.

4. Aufsatz (10;42;120;130) nach einem der vorhergehenden Ansprüche, **dadurch gekennzeichnet, dass** die Stege (38,58) im Radialschnitt eine runde und/oder eine sägezahnartige und/oder eine trapezartige Form aufweisen.

5. Aufsatz (122) nach einem der vorhergehenden Ansprüche, **dadurch gekennzeichnet, dass** die Stege (114) insbesondere als Widerhaken (124) ausgebildete Rückhaltevorrichtungen zum irreversiblen Verschrauben des Aufsatzes (112) mit einem Behältnis (40;60;80;100;112;132) aufweisen.

6. Aufsatz (130) nach einem der vorhergehenden Ansprüche, **dadurch gekennzeichnet, dass** die Stege (140) insbesondere als Widerhaken (136) ausgebildete Rückhaltevorrichtungen zum Zurückhalten eines mit dem Behältnis (132) verschraubten Aufsatzes (130) entgegen der Schließrichtung aufweisen, wobei die Rückhaltevorrichtungen durch Aufbringen eines Drucks oder Zugs in radialer Richtung lösbar sind.

7. Aufsatz (10;42;122;130) nach einem der vorhergehenden Ansprüche, **dadurch gekennzeichnet, dass** der Aufsatz (10;42) aus Low Density Polyethylen (LDPE), High Density Polyethylen (HDPE), Polypropylen (PP) oder einem anderen Kunststoff gefertigt ist.

8. Behältnis (40;60;80;100;112;132), umfassend eine mittels eines Aufsatzes (10;42) verschließbare Öffnung (44;66), wobei im Bereich der Öffnung (44;66) radial nach Außen hervorstehende Stege (48;68;88;108) ausgebildet sind, die entlang mindestens einer Schraubenlinie verlaufen,
**dadurch gekennzeichnet,**
**dass** sich Stege (48;68;88;108), die entlang eines ersten Schraubenlinienabschnitts verlaufen, und Stege (48;68;88;108), die entlang eines zweiten in axialer Richtung (86) zum ersten Schraubenlinienabschnitt versetzten Schraubenlinienabschnitts verlaufen, in Umfangsrichtung (24) nicht überlappen.

9. Behältnis (60;100;112;132) nach Anspruch 8, **dadurch gekennzeichnet, dass** das Behältnis im Bereich der Öffnung (66) eine rundumlaufende Schürze (62;102) aufweist, dass die radial nach Außen hervorstehenden Stege (68;108) an der Schürze (62;102) ausgebildet sind, und dass eine Mittelachse der Schraubenlinie koaxial zu einer Mittelachse (70;103) der Schürze (62;102) verläuft.

10. Behältnis (60;100;112;132) nach Anspruch 9, **dadurch gekennzeichnet, dass** die Schürze (62;102) einen radial nach Außen verlaufenden Wandabschnitt aufweist, dass an der Schürze (62;102) eine Mehrzahl von Durchbrüchen (92;106) ausgebildet ist, die sich teilweise in den radial nach Außen verlaufenden Wandabschnitt erstrecken, dass die Stege (88;108) im Bereich der Durchbrüche (92;106) ausgebildet sind, und dass die radiale Erstreckung der Stege (88;108) bevorzugt höchstens der radialen Erstreckung der Durchbrüche (92;106) im radial nach Außen verlaufenden Wandabschnitt entspricht.

11. Behältnis (40;60;80;100;112;132) nach einem der Ansprüche 8 bis 10, **dadurch gekennzeichnet, dass** das Behältnis (40;60;80;100) in Umfangsrichtung eine Mehrzahl von rundumlaufenden Abschnitten aufweist, an denen Stege (48;68;88;108) vorgesehen sind, die jeweils einem gemeinsamen Schraubenlinienabschnitt folgen.

12. Behältnis (40;60;80;100;112;132) nach Anspruch 8 bis 11, **dadurch gekennzeichnet, dass** sich die Stege (48;68;88;108), die entlang des ersten Schraubenlinienabschnitts verlaufen, und die Stege (48;68;88;108), die entlang des zweiten in axialer Richtung (86) zum ersten Schraubenlinienabschnitt versetzten Schraubenlinienabschnitts verlaufen, in Umfangsrichtung (24) abwechseln.

13. Behältnis (40;60;80;100) nach einem der Ansprüche 8 bis 12, **dadurch gekennzeichnet, dass** an dem der Öffnung (44;66) des Behältnisses (40;60;80;100) abgewandten Ende der mindestens einen Schraubenlinie mindestens ein Anschlag für einen Steg eines Aufsatzes vorgesehen ist.

14. Behältnis (112) nach einem der Ansprüche 8 bis 13, **dadurch gekennzeichnet, dass** die Stege (116) insbesondere als Widerhaken (120) ausgebildete Rückhaltevorrichtungen zum irreversiblen Verschrauben eines Aufsatzes (10;42;122;130) mit dem Behältnis (112) aufweisen.

15. Behältnis (132) nach einem der Ansprüche 8 bis 14, **dadurch gekennzeichnet, dass** die Stege (142) insbesondere als Widerhaken (138) ausgebildete Rückhaltevorrichtungen zum Zurückhalten eines mit dem Behältnis (132) verschraubten Aufsatzes (110;130) entgegen der Schließrichtung aufweisen, wobei die Rückhaltevorrichtungen durch Aufbringen eines Drucks oder Zugs in radialer Richtung lösbar sind.

## Claims

1. Attachment (10; 42; 120; 130) for a container, comprising a circular outer wall (12, 59) with a wall section (20) that extends in a radial inward direction, wherein a plurality of apertures (14) are formed on the outer wall (12, 59), which partially extend into the radially inwardly extending wall section (20), and wherein projections (38, 58) projecting in a radial inward direction are formed in the area of the apertures (14), wherein the radial extension of the projections (38, 58) preferably corresponds to at most the radial extension of the apertures (14) in the radially inwardly extending wall section (20),
**characterized in that**
the projections (38, 58) extend along at least one helical line, wherein a center axis of the helical line extends coaxially with respect to a center axis (16) of the outer wall (12, 59), and projections (38) which extend along a first helical line section, and projections (38) which extend along a second helical line section that is offset in an axial direction with respect to the first helical line section, do not overlap one another in a circumferential direction (24).

2. Attachment (10; 42; 120; 130) according to claim 1, **characterized in that** the outer wall (12) has a plurality of circular sections (34) in the circumferential direction, which are provided with projections (38) which each follow a common helical line section.

3. Attachment (10; 42; 120; 130) according to claim 1 or 2, **characterized in that** the projections (38) which extend along the first helical line section, and the projections (38) which extend along the second helical line section that is offset in an axial direction with respect to the first helical line section, alternate in the circumferential direction (24).

4. Attachment (10; 42; 120; 130) according to any one of the preceding claims, **characterized in that**, viewed in a radial section, the projections (38, 58) have a round and/or saw-tooth and/or trapezoidal shape.

5. Attachment (122) according to any one of the preceding claims, **characterized in that** the projections (114) comprise retaining devices which are designed, in particular, in the form of barbs (124) for irreversibly screwing the attachment (112) to a container (40; 60; 80; 100; 112; 132).

6. Attachment (130) according to any one of the preceding claims, **characterized in that** the projections (140) comprise retaining devices, which are designed, in particular, in the form of barbs (136) for retaining an attachment (130), which is screwed to the container (132), in a direction opposite to the closing direction, wherein the retaining devices can be released by applying a pressure or a pulling force in a radial direction.

7. Attachment (10; 42; 122; 130) according to any one of the preceding claims, **characterized in that** the attachment (10; 42) is produced from low density polyethylene (LDPE), high density polyethylene (HDPE), polypropylene (PP) or another plastic material.

8. Container (40; 60; 80; 100; 112; 132) comprising an aperture (44; 66) that can be closed by means of an attachment (10; 42), wherein projections are formed in the area of the aperture (44; 66), which project in a radial outward direction and extend along at least one helical line, **characterized in that** projections (48; 68; 88; 108) which extend along a first helical line section, and projections (48; 68; 88; 108) which extend along a second helical line section that is offset in an axial direction (86) with respect to the first helical line section, do not overlap one another in the circumferential direction (24).

9. Container (60; 100; 112; 132) according to claim 8, **characterized in that** the container has a circular skirt (62; 102) in the area of the aperture (66), the projections (68; 108) that project in a radial outward direction are formed on the skirt (62; 102), and a center axis of the helical line extends coaxially with respect to a center axis (70; 103) of the skirt (62; 102).

10. Container (60; 100; 112; 132) according to claim 9, **characterized in that** the skirt (62; 102) has a wall section that extends in a radial outward direction, a plurality of apertures (92; 102) are formed on the skirt (62; 102), which partially extend into the wall section that extends in a radial outward direction, the projections (88; 108) are formed in the area of the apertures (92; 106), and the radial extension of the projections (88, 108) preferably corresponds to at most the radial extension of the apertures (92; 106) in the wall section that extends in a radial outward direction.

11. Container (40; 60; 80; 100; 112; 132) according to any one of claims 8 to 10, **characterized in that** the container (40; 60; 80; 100) comprises a plurality of circular sections in a circumferential direction, which are provided with projections (48; 68; 88; 108) which each follow a common helical line section.

12. Container (40; 60; 80; 100; 112; 132) according to claims 8 to 11, **characterized in that** the projections (48; 68; 88; 108) which extend along the first helical line section, and the projections (48; 68; 88; 108) which extend along the second helical line section that is offset in an axial direction (86) with respect to the first helical line section, alternate in the circumferential direction (24).

13. Container (40; 60; 80; 100) according to any one of the claims 8 to 12, **characterized in that** the end of the at least one helical line facing away from the aperture (44; 66) of the container (40; 60; 80; 100) has at least one stop for a projection of an attachment.

14. Container (112) according to any one of the claims 8 to 13, **characterized in that** the projections (116) comprise retaining devices which are designed, in particular, in the form of barbs (120) for irreversibly screwing an attachment (10; 42; 122; 130) to the container (112).

15. Container (132) according to any one of the claims 8 to 14, **characterized in that** the projections (142) comprise retaining devices which are designed, in particular, in the form of barbs (138) for retaining an attachment (110; 130) that is screwed to the container (132) in a direction opposite to the closing direction, wherein the retaining devices can be released by applying a pressure or a pulling force in a radial direction.

## Revendications

1. Coiffe d'obturation (10 ; 42 ; 120 ; 130) dévolue à un récipient, munie d'une paroi extérieure (12, 59) longeant la périphérie et comportant une zone de paroi (20) qui pointe radialement vers l'intérieur, ladite paroi extérieure (12, 59) présentant une pluralité d'évidements (14) qui pénètrent, en partie, dans ladite zone de paroi (20) pointant radialement vers l'intérieur, sachant que des membrures (38, 58) faisant saillie vers l'intérieur, dans le sens radial, sont ménagées dans la région desdits évidements (14), l'étendue radiale desdites membrures (38, 58) correspondant de préférence, au maximum, à l'étendue radiale desdits évidements (14) dans ladite zone de paroi (20) pointant radialement vers l'intérieur,
**caractérisée par le fait**
**que** le tracé des membrures (38, 58) longe au moins une ligne hélicoïdale, un axe médian de ladite ligne hélicoïdale s'étendant coaxialement à un axe médian (16) de la paroi extérieure (12, 59) ; et par le fait que des membrures (38) longeant un premier segment de la ligne hélicoïdale, et des membrures (38) longeant un second segment de ladite ligne hélicoïdale qui est décalé dudit premier segment de la ligne hélicoïdale, dans la direction axiale, ne se chevauchent pas dans la direction circonférentielle (24).

2. Coiffe d'obturation (10 ; 42 ; 120 ; 130) selon la revendication 1, **caractérisée par le fait que** la paroi extérieure (12) est pourvue, dans la direction circonférentielle, d'une pluralité de tronçons (34) longeant la périphérie et sur lesquels sont prévues des membrures (38) qui suivent, à chaque fois, un segment de ligne hélicoïdale commun.

3. Coiffe d'obturation (10 ; 42 ; 120 ; 130) selon la revendication 1 ou 2, **caractérisée par le fait que** les membrures (38) longeant le premier segment de la ligne hélicoïdale, et les membrures (38) longeant le second segment de ladite ligne hélicoïdale qui est décalé dudit premier segment de la ligne hélicoïdale, dans la direction axiale, alternent dans la direction circonférentielle (24).

4. Coiffe d'obturation (10 ; 42 ; 120 ; 130) selon l'une des revendications précédentes, **caractérisée par le fait que** les membrures (38, 58) présentent, en coupe radiale, une forme circulaire et/ou une configuration en dents de scie et/ou une forme trapézoïdale.

5. Coiffe d'obturation (110) selon l'une des revendications précédentes, **caractérisée par le fait que** les membrures (114) sont dotées de dispositifs de retenue notamment réalisés sous la forme d'ardillons (118), en vue de la solidarisation vissée irréversible de ladite coiffe d'obturation (110) avec un récipient (40 ; 60 ; 80 ; 100 ; 112 ; 132).

6. Coiffe d'obturation (130) selon l'une des revendications précédentes, **caractérisée par le fait que** les membrures (140) sont dotées de dispositifs de retenue notamment réalisés sous la forme d'ardillons (136) visant à retenir, en sens inverse de la direction de fermeture, une coiffe d'obturation (130) solidarisée par vissage avec le récipient (132), lesdits dispositifs de retenue étant libérables par application d'une pression ou d'une traction dans le sens radial.

7. Coiffe d'obturation (10 ; 42 ; 122 ; 130) selon l'une des revendications précédentes, **caractérisée par le fait que** ladite coiffe d'obturation (10 ; 42) est fabriquée en du polyéthylène à faible densité (LDPE), en du polyéthylène à haute densité (HDPE), en du polypropylène (PP) ou en une autre matière plastique.

8. Récipient (40 ; 60 ; 80 ; 100 ; 112 ; 132) muni d'une ouverture (44 ; 66) pouvant être occultée au moyen d'une coiffe d'obturation (10 ; 42), sachant que des membrures (48 ; 68 ; 88 ; 108) faisant saillie vers l'extérieur dans le sens radial, et longeant au moins une ligne hélicoïdale, sont ménagées dans la région de ladite ouverture (44 ; 66),
**caractérisé par le fait**
**que** des membrures (48 ; 68 ; 88 ; 108) longeant un premier segment de la ligne hélicoïdale, et des membrures (48 ; 68 ; 88 ; 108) longeant un second segment de ladite ligne hélicoïdale qui est décalé dudit premier segment de la ligne hélicoïdale, dans la direction axiale (86), ne se chevauchent pas dans la direction circonférentielle (24).

9. Récipient (60 ; 100 ; 112 ; 132) selon la revendication 8, **caractérisé par le fait que** ledit récipient est doté d'une collerette (62 ; 102) longeant la périphérie dans la région de l'ouverture (66) ; **par le fait que** les membrures (68 ; 108) faisant saillie vers l'extérieur, dans le sens radial, sont ménagées sur ladite collerette (62 ; 102) ; et **par le fait qu'**un axe médian de la ligne hélicoïdale s'étend coaxialement à un axe médian (70 ; 103) de ladite collerette (62 ; 102).

10. Récipient (60 ; 100 ; 112 ; 132) selon la revendication 9, **caractérisé par le fait que** la collerette (62 ; 102) offre une zone de paroi pointant radialement vers l'extérieur ; **par le fait que** ladite collerette (62 ; 102) comporte une pluralité d'évidements (92 ; 106) qui pénètrent, en partie, dans ladite zone de paroi pointant radialement vers l'extérieur ; **par le fait que** les membrures (88 ; 108) sont ménagées dans la région desdits évidements (92 ; 106) ; et **par le fait que** l'étendue radiale desdites membrures (88 ; 108) correspond de préférence, au maximum, à l'étendue radiale desdits évidements (92 ; 106) dans ladite zone de paroi pointant radialement vers l'extérieur.

11. Récipient (40 ; 60 ; 80 ; 100 ; 112 ; 132) selon l'une des revendications 8 à 10, **caractérisé par le fait que** ledit récipient (40 ; 60 ; 80 ; 100) est pourvu, dans la direction circonférentielle, d'une pluralité de tronçons longeant la périphérie et sur lesquels sont prévues des membrures (48 ; 68 ; 88 ; 108) qui suivent, à chaque fois, un segment de ligne hélicoïdale commun.

12. Récipient (40 ; 60 ; 80 ; 100 ; 112 ; 132) selon les revendications 8 à 11, **caractérisé par le fait que** les membrures (48 ; 68 ; 88 ; 108) longeant le premier segment de la ligne hélicoïdale, et les membrures (48 ; 68 ; 88 ; 108) longeant le second segment de ladite ligne hélicoïdale qui est décalé dudit premier segment de la ligne hélicoïdale, dans la direction axiale (86), alternent dans la direction circonférentielle (24).

13. Récipient (40 ; 60 ; 80 ; 100) selon l'une des revendications 8 à 12, **caractérisé par le fait qu'**au moins une butée, dédiée à une membrure d'une coiffe d'obturation, est prévue à l'extrémité de la au moins une ligne hélicoïdale, qui est tournée à l'opposé de l'ouverture (44 ; 66) dudit récipient (40 ; 60 ; 80 ; 100).

14. Récipient (112) selon l'une des revendications 8 à 13, **caractérisé par le fait que** les membrures (116) sont dotées de dispositifs de retenue notamment réalisés sous la forme d'ardillons (120), en vue de la solidarisation vissée irréversible d'une coiffe d'obturation (10 ; 42 ; 122 ; 130) avec ledit récipient (112).

15. Récipient (132) selon l'une des revendications 8 à 14, **caractérisé par le fait que** les membrures (142) sont dotées de dispositifs de retenue notamment réalisés sous la forme d'ardillons (138) visant à retenir, en sens inverse de la direction de fermeture, une coiffe d'obturation (110 ; 130) solidarisée par vissage avec ledit récipient (132), lesdits dispositifs de retenue étant libérables par application d'une pression ou d'une traction dans le sens radial.
